# EUROPÄISCHE PATENTANMELDUNG

(11) **EP 1 033 677 A1**
(43) Veröffentlichungstag der Anmeldung: **06.09.2000**
(21) Anmeldenummer: 99810190.1
(22) Anmeldetag: 04.03.1999
(51) Int. Cl.: G06K 19/077

(54) **Verfahren für die Herstellung eines Chipobjektes**

(71) Anmelder: ESEC Management SA, 6330 Cham (CH); Sempac SA, 6330 Cham (CH)
(72) Erfinder: Truckenbrod, Willi, 6300 Zug (CH)
(74) Vertreter: Falk, Urs, Dr.

(57) **Zusammenfassung**

Die Erfindung betrifft ein Verfahren für die Herstellung eines Chipobjektes, das einen Körper (1) und ein Elektronikmodul (2) aufweist. Der Körper (1) des Chipobjektes wird im Spritzgussverfahren hergestellt und dabei mit für die Fixierung des Elektronikmoduls (2) geeigneten Elementen (7; 16; 20) versehen. Die Elemente (7; 16; 20) bilden entweder einen Schnappverschluss, in welchem das Elektronikmodul (2) beim Einsetzen im Körper (1) einrastet oder die Elemente (7; 16; 20) werden nach dem Einsetzen des Elektronikmoduls (2) deformiert, so dass das Elektronikmodul (2) ebenfalls fixiert wird.

Das Verfahren ermöglicht die klebstofffreie Herstellung von Chipobjekten, insbesondere von Chipkarten.

## Beschreibung

Die Erfindung betrifft ein Verfahren für die Herstellung eines Chipobjektes der im Oberbegriff des Anspruchs 1 genannten Art.

Chipobjekte, insbesondere Chipkarten, bestehen im wesentlichen aus einem dünnen Körper und einem im Körper eingebetteten Elektronikmodul. Der Körper ist aus einer gepressten bzw. gegossenen oder laminierten Kunststoffmasse hergestellt, in welcher das Elektronikmodul eingeklebt und dadurch fixiert wird. Das Elektronikmodul besteht aus einem Halbleiterchip, der auf einem Systemträger angeordnet und im allgemeinen von einem eine Modulkapsel bildenden Kunststoff umgeben ist. Als Systemträger kommen dünne Metallstreifen oder flexible Leiterplatten, sogenannte Flextapes, in Frage.

Ein weiteres Beispiel für Chipobjekte sind sogenannte Tags. Tags sind Datenträger mit einem Chip, wobei der Datenaustausch kontaktlos erfolgt. Tags werden beispielsweise innerhalb einer Fabrik zur Kennzeichnung von Warenkörben verwendet, die Materialien oder Gegenstände von einem Ort zu einem anderen Ort transportieren. Tags werden in ähnlicher Weise wie Strichcodes verwendet, sind aber "intelligenter".

Flexible Leiterplatten umfassen im allgemeinen eine elektrisch nicht leitende Folie, beispielsweise aus Kunststoff oder Papier, welche ein- oder beidseitig mit einer elektrisch leitenden Schicht, im allgemeinen aus vergoldetem Kupfer, versehen ist. Der Halbleiterchip wird auf der Leiterplatte montiert und beispielsweise im Transfer-Mold Verfahren oder Globetop Verfahren mit der die Modulkapsel bildenden Kunststoffmasse umgeben. Anschliessend wird das Elektronikmodul ausgestanzt und in den eine Vertiefung aufweisenden, als Halbfabrikat vorbereiteten Körper der Chipkarte eingeklebt.

Das Klebeverfahren weist mehrere Nachrteile auf, von welchen insbesondere die Abhängigkeit der Viskosität der verwendbaren Klebstoffe von der Temperatur, die von Los zu Los schwankenden Eigenschaften der Klebstoffe, die nach Prozessunterbrüchen mit den Klebstoffen auftretenden Probleme und die benötigte Rauhigkeit der zu verklebenden Flächen genannt sein sollen. Bei der Fixierung des Elektronikmoduls in einem durch Laminierung hergestellten Körper können sich ausserdem gewisse vom Herstellungsprozess in oder am laminierten Körper vorhandene Stoffe wie beispielsweise Paraffin als Nachteil erweisen. Damit bei Klebeverfahren dennoch befriedigende Ergebnisse erzielt werden können, müssen aufwendige chemische und mechanische Reinigungs- und Aufrauhprozesse am Körper und am Elektronikmodul durchgeführt werden.

Um Elektronikmodule ohne Klebung im Chipobjekt zu fixieren, können sie in einem Formhohlraum mit einer zur Bildung des Körpers des Chipobjektes vorgesehenen Kunststoffmasse umspritzt werden. Für Elektronikmodule, die auf einem relativ starren Metallstreifen aufgebaut sind, sind solche Verfahren bekannt aus dem europäischen Patent EP 399 868 und aus der europäischen Patentanmeldung EP 599 194. Elektronikmodule, die auf einer flexiblen Leiterplatte basieren, müssen hingegen vor dem Umspritzen an einer Folie, beispielsweise einer Frontseitenetikette des Chipobjektes, fixiert werden.

Der Erfindung liegt die Aufgabe zugrunde, ein Verfahren zur Herstellung eines Chipobjektes vorzuschlagen, bei dem ein Elektronikmodul ohne Verwendung von Klebstoff und ohne Verwendung einer Frontseitenetikette zum Chipobjekt verarbeitet werden kann.

Die genannte Aufgabe wird erfindungsgemäss gelöst durch die Merkmale des Anspruches 1.

Die Erfindung beruht auf dem Gedanken, den Körper des Chipobjektes mit für die Fixierung des Elektronikmoduls geeigneten Elementen im Spritzgussverfahren herzustellen. Die Elemente bilden entweder einen Schnappverschluss, wobei das Elektronikmodul beim Einsetzen im Körper einrastet oder die Elemente werden nach dem Einsetzen des Elektronikmoduls deformiert, so dass das Elektronikmodul ebenfalls fixiert wird.

Nachfolgend werden Ausführungsbeispiele der Erfindung anhand der Zeichnung näher erläutert.

Es zeigen:
- Fig. 1: ein erstes Chipobjekt, das einen Körper und ein Elektronikmodul umfasst, vor dem Zusammenbau,
- Fig. 2: den Körper des ersten Chipobjektes in der Draufsicht,
- Fig. 3: den Körper eines zweiten Chipobjektes,
- Fig. 4A, B: ein drittes Chipobjekt vor und nach Zusammenbau,
- Fig. 5A, B: ein viertes Chipobjekt vor und nach Zusammenbau, und
- Fig. 6: ein fünftes Chipobjekt vor dem Zusammenbau.

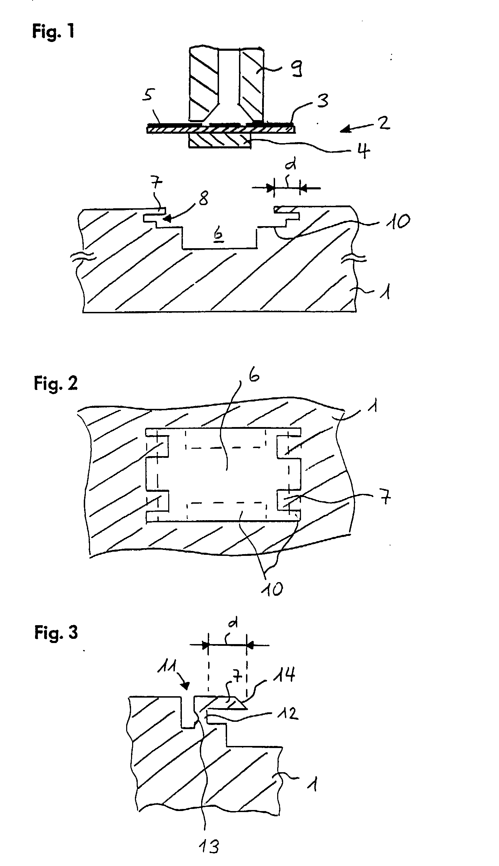

Die Fig. 1 zeigt in seitlicher Ansicht einen Körper 1 und ein Elektronikmodul 2 vor dem Zusammenfügen zu einem als Chipkarte dienenden Chipobjekt. Das Elektronikmodul 2 enthält einen Halbleiterchip, der auf einem Systemträger 3 montiert und im allgemeinen von einem eine Modulkapsel 4 bildenden Kunststoff umgeben ist. Die Modulkapsel 4 ist insbesondere ein im Transfer-Mold Verfahren hergestelltes Gehäuse. Als Systemträger 3 dient ein dünner Metallstreifen, ein sogenanntes Leadframe, oder eine Leiterplatte. Das Elektronikmodul 2 weist mehrere Kontaktflächen 5 auf, die elektrische Aussenkontakte des fertigen Chipobjektes bilden. Der aus einer Kunststoffmasse durch Spritzgiessen hergestellte Körper 1 weist eine Vertiefung 6 zur Aufnahme des Elektronikmoduls 2 auf. Der Rand der Vertiefung 6 ist mit in horizontaler Richtung über den Rand der Vertiefung 6 vorstehenden Lippen 7 ausgebildet. Die seitlichen Abmessungen der Vertiefung 6 und des Elektronikmoduls 2 sind so aufeinander abgestimmt, dass der Rand des Systemträgers 3 in die unter den Lippen 7 vorhandene Aussparung 8 zu liegen kommt: Die Lippen 7 bilden für die Fixierung des Elektronikmoduls 2 geeignete Elemente in der Form eines Schnappverschlusses.

Das Elektronikmodul 2 wird in herkömmlicher Technologie gefertigt und muss, bevor es im Körper 1 montiert werden kann, ausgestanzt werden. Die Montage des ausgestanzten Elektronikmoduls 2 im Körper 1 erfolgt, indem das von einem Stempel 9 aufgenommene und vorzugsweise mittels Vakuum gehaltene Elektronikmodul 2 in die Vertiefung 6 eingesetzt wird, wobei das Elektronikmodul 2 in der mittels der Lippen 7 gebildeten Aussparung 8 einrastet. Die Tiefe d der Aussparung 8 beträgt typischerweise 0.1 bis 0.3 mm.

Im Zentralbereich ist die Vertiefung 6 so tief ausgebildet, dass zwischen der Modulkapsel 4 und dem Körper 1 ein Zwischenraum verbleibt. Damit wird erreicht, dass der Körper 1 bei normalem Gebrauch der Chipkarte, wenn die Chipkarte etwas gebogen wird, keinen Druck auf die Modulkapsel 4 und den darin befindlichen Halbleiterchip ausübt.

Die Vertiefung 6 weist eine horizontale Fläche 10 auf, auf der die Unterseite des Systemträgers 3 des montierten Elektronikmoduls 2 aufliegt. Im Bereich der Lippen 7 ist die Fläche 10 bevorzugt sehr schmal ausgebildet oder fehlt dort sogar, damit das Elektronikmodul 2 beim Einsetzen im Körper 1 soweit hineingedrückt werden kann, dass der Randbereich des Systemträgers 3 etwas nach oben gebogen wird und somit an der Lippe 7 vorbeibewegt werden und einrasten kann. Im Bereich ausserhalb der Lippen 7 ist die Fläche 10, wie aus der Fig. 2 ersichtlich ist, die den Körper 1 in der Draufsicht zeigt, relativ breit und somit als grosse Auflagefläche für den Systemträger 3 des montierten Elektronikmoduls 2 ausgebildet.

Die Fig. 3 zeigt ein zweites Ausführungsbeispiel, bei dem der Körper 1 hinter jeder Lippe 7 mit einem Schlitz 11 versehen ist. Die Lippe 7 ist dann nur noch über einen Steg 12 mit dem Rest des Körpers 1 verbunden. Der Steg 12 weist bevorzugt noch eine Kerbe 13 auf, damit sich die Lippe 7 beim Einsetzen des Elektronikmoduls 2 ohne grossen Widerstand biegen lässt. Um das Einsetzen des Elektronikmoduls 2 noch weiter zu erleichtern, ist die Spitze der Lippe 7 zudem bevorzugt mit einer schrägen Kante 14 ausgebildet. Die durch den Schlitz 11 und die Kerbe 13 vergrösserte Flexibilität des Schnappverschlusses ermöglicht es, die Tiefe d der Aussparung 8 zu verlängern und dadurch die Fixierung des montierten Elektronikmoduls 2 zu verstärken.

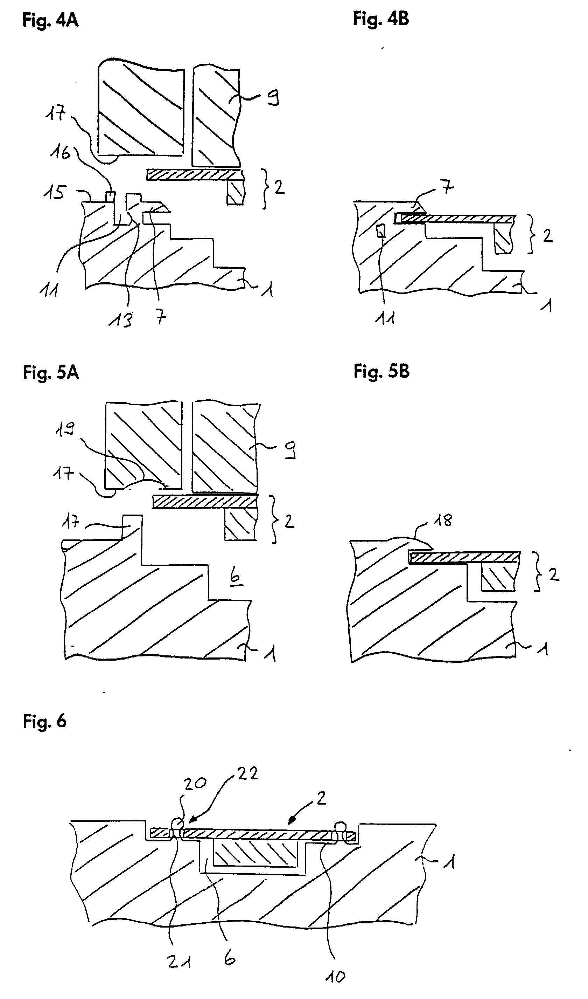

Die Fig. 4A und 4B zeigen ein drittes Ausführungsbeispiel des Chipobjektes vor und nach dem Zusammenbau von Elektronikmodul 2 und Körper 1, bei dem die Lippen 7 gegenüber der Oberfläche 15 der Körpers 1 überhöht sind. Zudem kann der Körper 1 auf der anderen Seite des Schlitzes 11 einen zusätzlichen Nocken 16 aufweisen. Die Montage des Elektronikmoduls 2 erfolgt hier mit einem Stempel 9, der eine heizbare Randfläche 17 aufweist. Nach dem Einrasten des Elektronikmoduls 2 heizt der Stempel 9 die Lippe 7 und den allenfalls vorhandenen Nocken 16 auf, bis sich die Lippe 7 und gegebenenfalls der Nocken 16 erweichen und verformen. Der Schlitz 11 wird dabei mindestens an der Oberfläche des Körpers 1 mit Plastikmaterial gefüllt, wobei die Oberfläche des Körpers 1 entweder plan ausgebildet wird oder einen kleinen Wulst aufweist.

Der Stempel 9 ist bevorzugt zweiteilig derart ausgebildet, dass die heizbare Randfläche 17 gegenüber dem mittleren Teil in vertikaler Richtung bewegbar ist.

Die Deformation der Lippen 7 und der allenfalls vorhandenen Nocken 16 durch Erwärmung führt möglicherweise zum Einbau mechanischer Spannungen, unter deren Einfluss sich der Körper 1 verformt oder verbiegt. Solche Effekte können vermindert werden, wenn die Lippen 7 bzw. Nocken 16 entweder ohnehin kleine Abmessungen aufweisen oder nur punktuell verformt werden.

Die Fig. 5A und 5B zeigen ein viertes Ausführungsbeispiel des Chipobjektes vor und nach dem Zusammenbau von Elektronikmodul 2 und Körper 1, bei dem der Körper 1 entlang des Randes der Vertiefung 6 mit vertikal vorstehenden Nocken 16 versehen ist. Bei der Montage wird das Elektronikmodul 2 in die Vertiefung 6 gelegt und anschliessend werden die Nocken 16 mittels des heizbaren Stempels 9 deformiert, so dass das Elektronikmodul 2 im Körper 1 fixiert ist. Anstelle der einzelnen Nocken 16 kann auch ein zusammenhängender Wulst vorgesehen sein, der nach dem Einlegen des Elektronikmoduls 2 im Körper 1 erwärmt und deformiert wird. Die Nocken 16 sind so plaziert, dass allenfalls beim fertigen Chipobjekt über die Oberfläche vorstehende Wülste den Gebrauch des Chipobjektes nicht beeinträchtigen.

Zur einfachen Bildung eines Wulstes 18 (Fig. 5B) weist die heizbare Randfläche 17 des Stempels 9 eine dellenartige Vertiefung 19 auf.

Bei den beschriebenen Beispielen, bei denen die fixierenden Elemente wie Lippen, Nocken, etc. deformiert werden, kann die Deformation auch mittels Ultraschallenergie oder Laserenergie erfolgen oder die Wärmezufuhr über den Stempel 9 unterstützen.

Die Fig. 6 zeigt ein fünftes Ausführungsbeispiel des Chipobjektes vor dem Zusammenbau von Elektronikmodul 2 und Körper 1. Der Körper 1 weist auf der Auflagefläche 10 der Vertiefung 6 angeordnete Nocken 20 auf, die beim Plazieren des Elektronikmoduls 2 in Durchbrüche und/oder Wegbrüche 22 des Elektronikmoduls 2 eingreifen.

Bei einer ersten Variante sind die Nocken 20 mit einem Hinterschnitt 21 ausgebildet und der Durchmesser der Durchbrüche 22 entspricht dem Durchmesser der Nocken 20 im Bereich des Hinterschnitts 21, so dass das Elektronikmodul 2 beim Einsetzen in der Vertiefung 6 an den Nocken 20 einrastet. Um die Fixierung des Elektronikmodul 2 zu verstärken, können die Nocken 20 nach dem Einlegen des Elektronikmoduls 2 noch erwärmt werden, so dass die Durch- bzw. Wegbrüche 22 vollständig mit Kunststoffmasse gefüllt werden.

Bei einer zweiten Variante sind die Nocken 20 ohne Hinterschnitt ausgebildet. Nach dem Einlegen des Elektronikmoduls 2 werden sie mittels des heizbaren Stempels 9 pilz- oder nietförmig verformt, so dass das Elektronikmodul 2 im Körper 1 vernietet ist.

Bei Chipkarten ist die Lage und Mindestgrösse der Kontaktflächen 5 durch Normen vorgegeben. Käufliche Elektronikmodule 2 unterscheiden sich hinsichtlich der Gesamtgrösse ihrer Kontaktflächen 5. Erst beim Ausstanzen aus dem Gurt bzw. Leadframe erhält das Elektronikmodul 2 seine endgültige Form. Bei optimaler Gestaltung des Designs des Körpers 1 der Chipkarte kann der Kartenkörper 1 problemlos mit Elektronikmodulen 2 unterschiedlicher Hersteller bestückt werden.

Falls die Kontaktflächen 5 (Fig. 1) des Elektronikmoduls 2, dessen Systemträger 3 eine flexible Leiterplatte ist, nicht bis zum Rand der Leiterplatte reichen, ist es möglich, die Lippen 7 des Kartenkörpers 1 so auszubilden, dass die Lippen 7 die Kontaktflächen 5 nicht berühren. Bei einem solchen Chipobjekt sind die Kontaktflächen 5 dann um deren Dicke von typisch 40 µm weniger tief gegenüber der Oberfläche 15 des Chipobjektes abgesenkt.

## Patentansprüche

1. Verfahren für die Herstellung eines Chipobjektes, das einen Körper (1) und ein Elektronikmodul (2) aufweist, wobei das Elektronikmodul (2) in eine Vertiefung (6) des Körpers (1) eingebettet ist, **gekennzeichnet durch die folgenden Schritte:**
- Herstellung des Körpers (1) aus einer Kunststoffmasse, wobei der Körper (1) mit der Vertiefung (6) und mit für die Fixierung des Elektronikmoduls (2) geeigneten Elementen (7; 16; 20) versehen wird;
- Einsetzen und Fixieren des Elektronikmoduls (2) im Körper (1).

2. Verfahren nach Anspruch 1, **dadurch gekennzeichnet, dass** die Elemente (7; 16; 20) Schnappelemente (7; 16) sind und dass die Fixierung des Elektronikmoduls (2) durch Einrasten an den Schnappelementen (7; 16) erfolgt.

3. Verfahren nach Anspruch 2, **dadurch gekennzeichnet, dass** die Elemente (7; 16; 20) nach dem Einrasten des Elektronikmoduls (2) deformiert werden.

4. Verfahren nach Anspruch 1, **dadurch gekennzeichnet, dass** die Fixierung des Elektronikmoduls (2) durch Deformation der Elemente (7; 16; 20) erfolgt.

5. Verfahren nach Anspruch 4, **dadurch gekennzeichnet, dass** die Deformation der Elemente (7; 16; 20) durch Zufuhr von Wärme erfolgt.
